# EUROPÄISCHE PATENTSCHRIFT

(11) **EP 4 049 430 B1**
(45) Veröffentlichungstag und Bekanntmachung des Hinweises auf die Patenterteilung: **18.03.2026**
(21) Anmeldenummer: 20824124.0
(22) Anmeldetag: 01.12.2020
(51) Int. Cl.: H04L 9/40, H04L 12/46

(54) **ÜBERTRAGUNGSVORRICHTUNG ZUM ÜBERTRAGEN VON DATEN**
TRANSMISSION DEVICE FOR THE TRANSMISSION OF DATA
DISPOSITIF DE TRANSMISSION POUR LA TRANSMISSION DE DONNÉES

(30) Priorität: 19.12.2019 DE 102019220249
(43) Veröffentlichungstag der Anmeldung: 31.08.2022
(73) Patentinhaber: Siemens Mobility GmbH, 80997 München (DE)
(72) Erfinder: FALK, Rainer, 85586 Poing (DE); HINGOS, David, East Brunswick, NJ 08816 (US); METEL, Omer, Anchorage, KY 40223 (US); OTTO, Christina, 81739 Muenchen (DE); PATZLAFF, Heiko, 80799 München (DE); PFLEGER DE AGUIAR, Leandro, Robbinsville, NJ 08691 (US); WIMMER, Martin, 85579 Neubiberg (DE)
(74) Vertreter: Siemens Patent Attorneys
(86) Internationale Anmeldenummer: PCT/EP2020/084036
(87) Internationale Veröffentlichungsnummer: WO 2021/121948

(56) Entgegenhaltungen:
- EP-A1- 3 139 548
- WO-A1-2018/162176
- WO-A1-2019/099088
- US-A1- 2016 330 225

## Beschreibung

Die vorliegende Erfindung betrifft eine Übertragungsvorrichtung zum Übertragen von Daten zwischen einem ersten Netzwerk und einem zweiten Netzwerk.

Zur sicheren Kommunikation zwischen einem sicherheitskritischen Netzwerk, wie beispielsweise einem Produktionsnetzwerk oder einem Bahnsicherungsnetzwerk, und einem offenen Netzwerk, wie beispielsweise einem lokalen Netzwerk oder dem Internet, werden herkömmlicherweise insbesondere Übertragungsvorrichtungen, wie Datendioden oder Firewalls, eingesetzt, um eine unidirektionale Datenübertragung zwischen dem sicherheitskritischen Netzwerk und dem offenen Netzwerk zu ermöglichen. Diese Übertragungsvorrichtungen sind beispielsweise dazu eingerichtet sicherzustellen, dass von dem offenen Netzwerk keine beliebigen Daten an das sicherheitskritische Netzwerk übermittelt werden können und sind insbesondere ferner dazu eingerichtet, das sicherheitskritische Netzwerk vor Angriffen und Eindringversuchen (engl. "Intrusion attempts") zu schützen.

Aus der WO 2019/099088 A1 ist ein Verfahren und eine Systemanordnung zur Lebenszyklusverwaltung für industrielle Netzwerksicherheit bekannt, die charakterisiert sind durch mindestens einen Multi-App-Sensor, der jeweils basierend auf mehreren empfangenen Konfigurationsprofilen so konfiguriert werden kann, dass jeweils mehrere Anwendungen von unterschiedlichen Sicherheitsanbietern ausgeführt werden und dabei überprüft wird, welche Anwendung Daten sowohl von einem Steuersystem in dem industriellen Netzwerk als auch von einem virtuellen Modell des Steuersystems überwacht und einsammelt. Das Steuersystem kann hierfür mindestens einen "Programmable Logic Controller (PLC)" enthalten. Der Multi-App-Sensor generiert basierend auf Vergleichen zwischen den gesammelten Daten aus dem Steuersystem und den Daten aus dem virtuellen Modell zumindest ein weiteres Konfigurationsprofil, das eine weitere Erkennungsabdeckung für Anomalien des Steuersystems bietet und weiteren Multi-App-Sensoren bereitgestellt wird.

Aus der EP 3 139 548 A1 ist eine Gateway-Architektur bekannt, die eine bidirektionale Kommunikation zwischen sich in verschiedenen Domänen befindenden Anwendungen zulässt und die ein hohes Maß an Schutz bietet. So ist das Gateway angepasst, um eine erste Domäne mit einer zweiten Domäne zu verbinden, und umfasst dabei (i) ein Gateway-internes Protokoll, (ii) erste von der ersten Domäne gehostete und zweite von der ersten Domäne gehostete Protokolladapter, die jeweils dazu bestimmt sind, eine Umwandlung zwischen Anwendungsdaten, die gemäß einem anwendungsbezogenen Protokoll bezüglich der ersten und zweiten Domäne formatiert sind, und Gateway-Daten, die gemäß einem Gateway-internen Protokoll formatiert sind, vorzunehmen, und **(iii)** ein Sicherheitsmodul, das auf einem separaten Hosting-Plattform gehostet wird, und dazu bestimmt ist, gemäß dem Gateway-internen Protokoll über eine erste Datenverbindung mit dem ersten Protokolladapter sowie über eine zweite Datenverbindung mit dem zweiten Protokolladapter zu kommunizieren, wobei der erste Protokolladapter, der zweite Protokolladapter und das Sicherheitsmodul physikalisch voneinander getrennt sind und wobei das Sicherheitsmodul einen Satz von Funktionsblöcken aufweist, um einen sicheren bidirektionalen Fluss der Gateway-Daten entlang zweier unterschiedlicher und getrennter unidirektionaler Pfade, einem ersten Pfad und einem zweiten Pfade, zwischen dem ersten Protokolladapter und dem zweiten Protokolladapter zu gewährleisten.

Aus der US 2016/0330225 A1 ist ein Verfahren und Vorrichtung zum Erkennen von Anomalien in industriellen Steuerungssystemen bekannt Das Verfahren bzw. die Vorrichtung umfasst eine Datenanalyse korrekter Betriebsparameter von mindestens einem Eingabegerät und Speichern der korrekten Betriebsparameter oder eine Korrelation von mindestens zwei Betriebsparameter als Trainingsdaten. Die Trainingsdaten werden verwendet, um ein Anomalie-Erkennungssystem zu trainieren. Mit dem Anomalie-Erkennungssystem werden im aktueller Betrieb Parameter des mindestens einen Eingabegeräts erfasst. Das Anomalie-Erkennungssystem überprüft dann mindestens eines der erfassten Betriebsparameter oder die Korrelation der zumindest zwei erfassten Betriebsparameter, um eine Abweichung aus den Trainingsdaten zu erfassen. Wenn die erkannte Abweichung oberhalb oder unterhalb einer definierten Schwelle ist, dann wird eine Kommunikationsfunktion durchgeführt. Die Kommunikationsfunktion ist z.B. derart beschaffen, dass (i) mindestens ein Alarm erzeugt wird, (ii) Daten an mindestens eines von beiden, einem Steuersystem und eine Bedienperson, kommuniziert werden und (iii) die Daten oder der Alarm aufgezeichnet werden.

Vor diesem Hintergrund besteht eine Aufgabe der vorliegenden Erfindung darin, eine verbesserte Übertragungsvorrichtung bereitzustellen.

Gemäß einem ersten Aspekt wird eine Übertragungsvorrichtung zum Übertragen von Daten zwischen einem ersten Netzwerk und einem zweiten Netzwerk vorgeschlagen. Die Übertragungsvorrichtung umfasst:
eine mit dem ersten Netzwerk koppelbare, erste unidirektionale Übertragungs-Einheit, die dazu eingerichtet ist, von dem ersten Netzwerk zu der Übertragungsvorrichtung übertragene Daten ausschließlich zu empfangen,
eine mit dem zweiten Netzwerk koppelbare, zweite unidirektionale Übertragungs-Einheit, die dazu eingerichtet ist, Daten von der Übertragungsvorrichtung zu dem zweiten Netzwerk ausschließlich zu senden, und
eine zwischen der ersten unidirektionalen Übertragungs-Einheit und der zweiten unidirektionalen Übertragungs-Einheit angeordnete Erkennungs-Einheit, die dazu eingerichtet ist, die von der ersten unidirektionalen Übertragungs-Einheit empfangenen Daten zu empfangen und Anomalitäten an den empfangenen Daten zu erkennen.

Da einerseits die erste unidirektionale Übertragungs-Einheit dazu eingerichtet ist, von dem ersten Netzwerk zu der Übertragungsvorrichtung übertragene Daten ausschließlich zu empfangen, und andererseits die zweite unidirektionale Übertragungs-Einheit dazu eingerichtet ist, Daten von der Übertragungsvorrichtung zu dem zweiten Netzwerk ausschließlich zu senden, wird in vorteilhafter Weise eine demilitarisierte Zone (engl. "Demilitarized zone (DMZ)"), welche die Erkennungs-Einheit umfasst, zwischen der ersten und der zweiten unidirektionalen Übertragungs-Einheit in der Übertragungsvorrichtung ausgebildet. Die demilitarisierte Zone ist insbesondere ein neutraler und von dem ersten Netzwerk und dem zweiten Netzwerk isolierter Bereich in der Übertragungsvorrichtung, der zwischen der ersten und der zweiten unidirektionalen Übertragungs-Einheit ausgebildet ist.

Dadurch, dass die Erkennungs-Einheit in der DMZ isoliert von dem ersten Netzwerk und dem zweiten Netzwerk angeordnet ist, kann kein Angriff oder Eindringversuch eines Angreifers auf die Erkennungs-Einheit von dem zweiten Netzwerk aus erfolgen. Das ist insbesondere deshalb so, da die zweite unidirektionale Übertragungs-Einheit ausschließlich eine Datenübertragung von der zweiten unidirektionalen Übertragungs-Einheit zu dem zweiten Netzwerk und nicht umgekehrt erlaubt. Infolgedessen erhöht sich die Manipulationssicherheit der Erkennungs-Einheit, wodurch die Sicherheit bei der Datenübertragung zwischen dem ersten Netzwerk und dem zweiten Netzwerk erhöht wird.

Durch die bereitgestellte Übertragungsvorrichtung wird es ferner ermöglicht, dass von dem ersten Netzwerk aus zu der Übertragungsvorrichtung übertragene Daten mittels der Erkennungs-Einheit überwacht und analysiert werden können, um somit Anomalitäten in dem ersten Netzwerk und Eindringversuche in das erste Netzwerk erkennen zu können. Parallel ermöglicht es die bereitgestellte Übertragungsvorrichtung, dass das erste Netzwerk von dem zweiten Netzwerk getrennt ist, um sicherzustellen, dass von dem zweiten Netzwerk keine beliebigen Daten an das erste Netzwerk übermittelt werden können und dass kein unbefugter Zugriff, beispielsweise zum Zwecke einer Manipulation des ersten Netzwerkes, von dem zweiten Netzwerk aus auf das erste Netzwerk erfolgt. Dies führt vorteilhafterweise zu einer zuverlässigen und optimierten Erkennung von Anomalitäten in dem ersten Netzwerk und zu einer Erhöhung der Manipulationssicherheit der Übertragungsvorrichtung, insbesondere der Erkennungs-Einheit.

Zusätzlich wird durch die Ausbildung der DMZ und der Anordnung der ersten unidirektionalen Übertragungs-Einheit sichergestellt, dass im Falle eines erfolgreichen Angriffs auf die Übertragungsvorrichtung, keine sicherheitskritischen Daten über die erste unidirektionale Übertragungs-Einheit in das erste Netzwerk übertragen werden können. Durch die erste unidirektionale Übertragungs-Einheit und die DMZ wird somit eine rückwirkungsfreie Trennung zwischen dem ersten Netzwerk und der Übertragungsvorrichtung und zwischen dem ersten Netzwerk und dem zweiten Netzwerk ermöglicht. Infolgedessen wird die Sicherheit bei der Datenübertragung zwischen dem ersten Netzwerk und dem zweiten Netzwerk erhöht.

Die Übertragungsvorrichtung ist insbesondere als ein Edge-Gerät, wie ein unidirektionales Gateway oder eine unidirektionale Datendiode ausgebildet. Die unidirektionale Datendiode ist insbesondere eine Einweg-Kommunikationseinrichtung, die eine physikalisch rückwirkungsfreie Trennung des ersten Netzwerkes und des zweiten Netzwerkes ermöglicht. Eine "physikalisch" rückwirkungsfreie Trennung liegt insbesondere dann vor, wenn die rückwirkungsfreie Trennung mittels physikalischer Bauelemente in der unidirektionalen Datendiode realisiert wird, wie beispielsweise der ersten und der zweiten unidirektionalen Übertragungs-Einheit, die das erste Netzwerk und das zweite Netzwerk derart verbinden, dass eine Kommunikationsverbindung ausschließlich von dem ersten Netzwerk in Richtung des zweiten Netzwerks vorhanden ist, jedoch keine physikalische Verbindung von dem zweiten Netzwerk in das erste Netzwerk vorliegt. Das unidirektionale Gateway ist insbesondere hardwaretechnisch und/oder softwaretechnisch implementiert und ist dazu eingerichtet, zwischen dem ersten und dem zweiten Netzwerk eine unidirektionale Verbindung herzustellen. Das unidirektionale Gateway ermöglicht vorzugsweise eine physikalisch oder logisch rückwirkungsfreie Trennung des ersten und des zweiten Netzwerkes. Unter dem Begriff einer "logisch" rückwirkungsfreien Trennung wird vorliegend insbesondere verstanden, wenn die rückwirkungsfreie Trennung mittels einer Anwendung von Algorithmen erfolgt, in dem Fall, wenn das Gateway in Software implementiert ist.

Die erste und die zweite unidirektionale Übertragungs-Einheit sind vorzugsweise derart innerhalb der Übertragungsvorrichtung angeordnet, dass die erste unidirektionale Übertragungs-Einheit dazu eingerichtet ist, ausschließlich Daten von dem ersten Netzwerk zu empfangen, während die zweite unidirektionale Übertragungs-Einheit dazu eingerichtet ist, ausschließlich Daten zu dem zweiten Netzwerk zu senden. In anderen Worten ist die erste unidirektionale Übertragungs-Einheit insbesondere nicht dazu eingerichtet, Daten an das erste Netzwerk zu senden, während die zweite unidirektionale Übertragungs-Einheit nicht dazu eingerichtet, Daten von dem zweiten Netzwerk zu empfangen.

Unter dem Begriff "unidirektional" wird vorliegend vorzugsweise verstanden, dass eine Übertragung von Daten zwischen zwei Netzwerken oder Geräten ausschließlich in eine Richtung erfolgt, beispielsweise von dem ersten Netzwerk unidirektional in Richtung zu der Übertragungsvorrichtung und von der Übertragungsvorrichtung unidirektional in Richtung zu dem zweiten Netzwerk.

Insbesondere können die erste und die zweite unidirektionale Übertragungs-Einheit einen oder mehrere Netzwerk-Ports umfassen. Ein Netzwerk-Port ist insbesondere als ein physikalischer Netzwerk-Port ausgebildet. Der physikalische Netzwerk-Port weist vorzugsweise eine RJ-45-Verbindung, eine M12-Verbindung oder eine Single-Pair-Ethernet-Verbindung auf, um jeweils mit dem ersten Netzwerk oder dem zweiten Netzwerk verbunden oder gekoppelt zu werden. Auch kann ein Netzwerk-Port ein Teil einer Netzwerkadresse sein, der die Zuordnung von TCP-Verbindungen ("Transmission Control Protocol") und UDP-Verbindungen ("User Datagram Protocol") und Datenpaketen zu Server und/oder Clients, die in dem ersten und/oder zweiten Netzwerk angeordnet sind, ermöglicht.

Die Erkennungs-Einheit umfasst insbesondere ein Intrusion-Detektion-System. Das Intrusion-Detektion-System (engl. "Intrusion Detection System" (IDS)) ist eine Sicherheitstechnologie, die das unbefugte Eindringen in ein Netzwerk erkennt, wenn beispielsweise Schadsoftware mithilfe sogenannter Exploit-Codes Sicherheitslücken eines Systems ausnutzt. Das Intrusion-Detektion-System umfasst insbesondere ein Netzwerk-Intrusion-Detektion-System (NIDS). Mittels eines IDS oder eines NIDS kann das betreffende Netzwerk, beispielsweise das erste Netzwerk, kontrolliert und effektiv nach Anomalitäten und/oder Eindringversuchen abgesucht werden.

Gemäß einer Ausführungsform sind die erste unidirektionale Übertragungs-Einheit und die zweite unidirektionale Übertragungs-Einheit jeweils hardwaretechnisch zumindest in Form eines Netzwerk-TAP oder einer unidirektionalen Datendiode implementiert.

Durch diese hardwaretechnische Implementierung in Form eines Netzwerk-TAP oder einer unidirektionalen Datendiode wird die Unidirektionalität der Datenübertragung der ersten und der zweiten unidirektionalen Übertragungs-Einheit, also die unidirektionale Datenübertragung von dem ersten Netzwerk aus zu der Übertragungsvorrichtung über die erste unidirektionale Übertragungs-Einheit und die unidirektionale Datenübertragung von der zweiten unidirektionalen Übertragungs-Einheit zu dem zweiten Netzwerk, in physikalischer Form erzielt. Dadurch ist es unmöglich, dass ein Angreifer von dem zweiten Netzwerk aus auf die Übertragungsvorrichtung, insbesondere auf die Erkennungs-Einheit, zugreifen kann und Manipulationen an dieser vornehmen kann. Somit erhöht sich der Schutz vor Manipulationsversuchen gegenüber der Erkennungs-Einheit, wodurch die Integrität des Gesamtsystems umfassend das erste Netzwerk, das zweite Netzwerk sowie die Übertragungsvorrichtung, und insbesondere die Sicherheit bei der Datenübertragung zwischen dem ersten und dem zweiten Netzwerk erhöht werden.

Der Netzwerk-TAP (engl. "Network-Test Access Point") ist insbesondere passiv oder aktiv ausgebildet. Ein passiver Netzwerk-TAP kann auch als eine sogenannte "Data Capture Unit" (DCU) bezeichnet werden. Eine erste unidirektionale Übertragungs-Einheit, die als ein passiver unidirektionaler Netzwerk-TAP ausgebildet ist, ist vorzugsweise dazu eingerichtet, den Netzwerkverkehr von dem ersten Netzwerk zu der Übertragungsvorrichtung zu überwachen und die Unidirektionalität der Datenübertragung von dem ersten Netzwerk zu der Übertragungsvorrichtung zu gewährleisten. Beispielsweise wird bei einem Netzwerk-TAP die Unidirektionalität der Datenübertragung durch eine physikalische Verdrahtung des Netzwerk-TAPs erzielt.

Die unidirektionale Datendiode ist insbesondere optisch ausgebildet. Vorzugsweise wird die Unidirektionalität der Datenübertragung der optischen unidirektionalen Datendiode durch ihren internen physikalischen Aufbau realisiert.

Die zweite unidirektionale Übertragungs-Einheit kann ferner auch eine physikalische serielle Schnittstelle, wie eine RS485-Schnittstelle, umfassen. Die Unidirektionalität der Datenübertragung wird hierbei insbesondere in einer softwaretechnischen Ausbildung durch einen Protokollbruch (engl. "Protocol Break") erzielt und/oder dadurch erzielt, dass ein verwendeter Kanal zur Datenübertragung ausschließlich unidirektional von der Übertragungsvorrichtung zu dem zweiten Netzwerk mittels Algorithmen eingerichtet wird. Diese Form der Implementierung ist insbesondere mit einem geringen Herstellungsaufwand verbunden. Weiterhin wird die Unidirektionalität der Datenübertragung in einer hardwaretechnischen Ausbildung der RS485-Schnittstelle durch eine physikalische Anpassung, vorzugsweise durch eine physikalische Verdrahtung der RS485-Schnittstelle erzielt, welche ausschließlich eine unidirektionale Datenübertragung von der Übertragungsvorrichtung zu dem zweiten Netzwerk ermöglicht.

Der Angriff kann ein Hardware-Angriff und/oder ein Software-Angriff, insbesondere ein Hacker-Angriff sein. Ein Software-Angriff ist insbesondere ein Angriffsversuch und/oder ein Eindringversuch auf die Übertragungsvorrichtung von dem zweiten Netzwerk aus. Bei einem Hardware-Angriff wird insbesondere versucht, die physikalische Struktur der jeweiligen Übertragungs-Einheit zu manipulieren.

Gemäß einer weiteren Ausführungsform umfassen die von der Erkennungs-Einheit erkennbaren Anomalitäten einen ersten Anomalitätstyp und einen zweiten Anomalitätstyp, wobei sich der erste Anomalitätstyp von dem zweiten Anomalitätstyp unterscheidet.

Vorteilhafterweise ist es durch die Erkennungs-Einheit möglich, unterschiedliche Anomalitätstypen, wie den ersten und den zweiten Anomalitätstyp, zu erkennen. Dies führt zu einer zuverlässigen und optimierten Erkennung von Anomalitäten in dem ersten Netzwerk, womit die Sicherheit bei der Datenübertragung zwischen dem ersten Netzwerk und dem zweiten Netzwerk erhöht wird.

Der erste Anomalitätstyp, welcher durch die Erkennungs-Einheit an den empfangenen Daten oder an aktuell empfangenen Daten erkannt wird, wird insbesondere dann erkannt, wenn die von dem ersten Netzwerk aktuell empfangenen Daten eine Unregelmäßigkeit oder eine Abweichung im Vergleich zu älteren empfangenen Daten aufweisen. Eine Unregelmäßigkeit kann beispielsweise eine stattfindende Kommunikation zwischen einem der Erkennungs-Einheit bekannten Teilnehmer des ersten Netzwerkes und einem unbekannten Teilnehmer des ersten Netzwerkes sein und/oder eine ungewöhnliche Netzwerkaktivität eines Teilnehmers des ersten Netzwerkes.

Der zweite Anomalitätstyp, welcher durch die Erkennungs-Einheit an den empfangenen Daten oder an aktuell empfangenen Daten erkannt wird, kann insbesondere unter dem Begriff "Exploit-Erkennung" subsummiert werden. Bei der "Exploit-Erkennung" werden die empfangenen Daten des ersten Netzwerkes mittels der Erkennungs-Einheit auf potentiell schädliche Datenpakete, wie sogenannte Exploit-Codes und Kommunikationsabläufe, hin untersucht.

Gemäß einer weiteren Ausführungsform weist die Übertragungsvorrichtung zumindest eine zwischen der ersten unidirektionalen Übertragungs-Einheit und der zweiten unidirektionalen Übertragungs-Einheit angeordnete CPU auf, in welcher die Erkennungs-Einheit sowie zusätzlich eine Modellierungs-Einheit implementiert sind, wobei die Modellierungs-Einheit dazu eingerichtet ist, ein Modell mit netzwerkspezifischen Daten von dem ersten Netzwerk bereitzustellen.

Die CPU ("Central Processing Unit") ist insbesondere innerhalb der DMZ ausgebildet.

Netzwerkspezifische Daten umfassen vorzugsweise Messwerte, wie beispielsweise Druck und/oder Temperatur von Teilnehmern des ersten Netzwerkes, zumindest eine Anzahl T von Teilnehmern oder eine Netzwerktopologie der Teilnehmer des ersten Netzwerkes, Betriebszustände von Teilnehmern des ersten Netzwerkes und/oder einen technischen Prozess, welcher durch zumindest einen Teilnehmer des ersten Netzwerkes ausgeführt wird. Netzwerkspezifische Daten können ferner IP-Adressen und/oder Netzwerk-Ports der Teilnehmer sowie Informationen über in dem ersten Netzwerk verwendete Netzwerkprotokolle, wie TCP, UDP, HTTP ("Hypertext Transfer Protocol") und/oder OPC UA ("OPC Unified Architecture") umfassen.

Das erste Netzwerk und das zweite Netzwerk umfassen jeweils insbesondere einen oder mehrere Teilnehmer. Die mehreren Teilnehmer sind vorzugsweise miteinander verbunden und bilden dadurch das jeweilige Netzwerk aus. Ein Teilnehmer ist beispielsweise ein Computer, wie ein Server, ein Client oder ein Router.

Das Modell bildet insbesondere das erste Netzwerk nach. Je mehr netzwerkspezifische Daten der Modellierungs-Einheit zur Verfügung gestellt werden und je aktueller diese zur Verfügung gestellten netzwerkspezifischen Daten sind, desto besser ist das durch die Modellierungs-Einheit bereitgestellte Modell des ersten Netzwerkes.

Gemäß einer weiteren Ausführungsform ist die Modellierungs-Einheit dazu eingerichtet, das Modell in Abhängigkeit von Vorkonfigurationsdaten des ersten Netzwerkes bereitzustellen und das somit bereitgestellte Modell der Erkennungs-Einheit zur Verfügung zu stellen.

Vorkonfigurationsdaten sind Daten, welche vorzugsweise eine bestimmte Netzwerktopologie von Teilnehmern des ersten Netzwerkes umfassen und der Modellierungs-Einheit beispielsweise über eine serielle Schnittstelle der Übertragungsvorrichtung zur Verfügung gestellt werden. Mittels der Vorkonfigurationsdaten wird insbesondere ein erstes initiales Modell durch die Modellierungs-Einheit bereitgestellt.

Gemäß einer weiteren Ausführungsform ist die Modellierungs-Einheit dazu eingerichtet, das Modell zumindest in Abhängigkeit von an einem bestimmten Zeitpunkt und/oder in Abhängigkeit von während einer bestimmten Zeitdauer von dem ersten Netzwerk über die erste unidirektionale Übertragungs-Einheit empfangenen Daten bereitzustellen und das somit bereitgestellte Modell der Erkennungs-Einheit zur Verfügung zu stellen.

Der bestimmte Zeitpunkt umfasst vorzugsweise zumindest einen Zeitpunkt nach dem Einschalten der Übertragungsvorrichtung und dem erstmaligen Verbinden der Übertragungsvorrichtung mit dem ersten Netzwerk über die erste unidirektionale Übertragungs-Einheit. Dabei wird beispielsweise mittels einer Plug-and-Play-Funktion zum Zeitpunkt des Verbindens das erste Netzwerk ausgelesen und auf Basis der ausgelesenen netzwerkspezifischen Daten des ersten Netzwerkes das Modell durch die Modellierungs-Einheit bereitgestellt. Denkbar ist insbesondere auch, dass die Übertragungsvorrichtung, umfassend die Erkennungs-Einheit, mit einem oder weiteren sicherheitskritischen Netzwerken über die Plug-and-Play-Funktion in einfacher Weise verbunden werden kann und somit die netzwerkspezifischen Daten des einen oder der weiteren sicherheitskritischen Netzwerke ausgelesen werden können.

Die bestimmte Zeitdauer umfasst vorzugsweise eine längere Zeitdauer nach dem Einschalten der Übertragungsvorrichtung und dem erstmaligen Verbinden der Übertragungsvorrichtung mit dem ersten Netzwerk über die erste unidirektionale Übertragungs-Einheit von beispielsweise mehreren Minuten, Stunden, Tagen, Wochen oder Monaten, also insbesondere eine Zeitdauer während des Betriebs der Übertragungsvorrichtung.

Diese bestimmte Zeitdauer kann auch als eine Lernphase der Übertragungsvorrichtung bezeichnet werden. Die Dauer der Lernphase ist vorzugsweise zeit- und/oder datengebunden. Eine zeitgebundene Lernphase wird beispielsweise nach Ablauf einer bestimmten Zeitdauer beendet. Eine datengebundene Lernphase wird insbesondere nach Erreichen einer bestimmten Menge an von dem ersten Netzwerk empfangenen Daten beendet. Nach dem Ablauf der bestimmten Zeitdauer oder der Beendigung der Lernphase wird anschließend auf Basis der während dieser bestimmten Zeitdauer ermittelten netzwerkspezifischen Daten das Modell bereitgestellt. Anschließend, nachdem das Modell bereitgestellt wurde, kann dies beispielsweise zum Analysieren der empfangenen Daten des ersten Netzwerkes der Erkennungs-Einheit zur Verfügung gestellt werden. Die zeitliche Phase nachdem das Modell bereitgestellt wurde, also die Phase nach der Lernphase, in der die Erkennungs-Einheit dazu eingerichtet ist, die empfangenen Daten auf Anomalitäten zu analysieren, kann auch als Analysephase bezeichnet werden. Im Falle einer Rekonfiguration des ersten Netzwerkes, beispielsweise nachdem ein neuer Teilnehmer hinzugefügt wurde, kann die Übertragungsvorrichtung neu gestartet werden und anschließend eine neue Lernphase begonnen werden. Vorzugsweise umfasst die Übertragungsvorrichtung einen Schalter zum Einschalten und/oder Ausschalten der Lernphase und/oder der Analysephase.

Gemäß einer weiteren Ausführungsform ist die Modellierungs-Einheit dazu eingerichtet, das Modell mittels Vorkonfigurationsdaten und in Abhängigkeit von an einem bestimmten Zeitpunkt und/oder in Abhängigkeit von während einer bestimmten Zeitdauer von dem ersten Netzwerk über die erste unidirektionale Übertragungs-Einheit empfangenen Daten bereitzustellen und das somit bereitgestellte Modell der Erkennungs-Einheit zur Verfügung zu stellen.

Diese Ausführungsform hat den Vorteil, dass die Bereitstellung des Modells auf Basis einer umfassenden und aktuellen Datenbasis, nämlich der Vorkonfigurationsdaten und der von an einem bestimmten Zeitpunkt und/oder in Abhängigkeit von während einer bestimmten Zeitdauer von dem ersten Netzwerk über die erste unidirektionale Übertragungs-Einheit empfangenen Daten erfolgt. Aufgrund dieser verbesserten Datenbasis kann ein verbessertes Modell durch die Modellierungs-Einheit bereitgestellt werden. Auch kann das bereitgestellte Modell in regelmäßigen Abständen mit aktuelleren netzwerkspezifischen Daten des ersten Netzwerkes aktualisiert werden und anschließend der Erkennungs-Einheit zur Verfügung gestellt werden. Hierbei ist die Übertragungsvorrichtung insbesondere dazu eingerichtet, die Erkennungs-Einheit und die Modellierungs-Einheit parallel auszuführen. Diese Ausführungsform führt infolgedessen zu einer zuverlässigen und optimierten Erkennung von Anomalitäten in dem ersten Netzwerk, womit die Sicherheit bei der Datenübertragung zwischen dem ersten Netzwerk und dem zweiten Netzwerk erhöht wird.

Gemäß einer weiteren Ausführungsform ist die Erkennungs-Einheit dazu eingerichtet, die von der ersten unidirektionalen Übertragungs-Einheit empfangenen Daten mit den netzwerkspezifischen Daten des bereitgestellten Modells zu vergleichen, um ein Vergleichsergebnis zu erhalten, wobei die Erkennungs-Einheit dazu eingerichtet ist, aus dem erhaltenen Vergleichsergebnis abzuleiten, ob zumindest eine Anomalität an den empfangenen Daten vorliegt.

Die Ableitung aus dem erhaltenen Vergleichsergebnis, ob eine Anomalität vorliegt, erfolgt insbesondere durch eine Schwellwertbildung an den von der Erkennungs-Einheit empfangenen Daten und/oder einem Vergleich des Schwellwertes mit den netzwerkspezifischen Daten des bereitgestellten Modells. Ferner kann die Ableitung durch eine Festlegung zumindest eines Intervalls mit zulässigen netzwerkspezifischen Daten erfolgen, in welchem angegeben wird, welche erhaltenen netzwerkspezifischen Daten noch zulässig sind.

Gemäß einer weiteren Ausführungsform ist die Übertragungsvorrichtung dazu eingerichtet, bei einem Vorliegen der zumindest einen Anomalität an den empfangenen Daten eine Fehlermeldung umfassend die erkannte Anomalität über die zweite unidirektionale Übertragungs-Einheit an eine Überwachungs-Einheit, welche in dem zweiten Netzwerk angeordnet ist oder mit diesem verbunden ist, zu übertragen.

Dadurch, dass wenn eine Anomalität vorliegt, nur eine Fehlermeldung an das zweite Netzwerk, insbesondere an die Überwachungs-Einheit übertragen wird, wird der Daten- und/oder Netzwerkverkehr oder das Netzwerkdatenvolumen zwischen dem ersten Netzwerk und dem zweiten Netzwerk in vorteilhafter Weise signifikant reduziert. Durch die bereitgestellte Übertragungsvorrichtung ist es vorteilhaft möglich, die von dem ersten Netzwerk empfangenen Daten bereits lokal oder vor Ort in der Übertragungsvorrichtung mittels der Erkennungs-Einheit zu analysieren. Somit ist es nicht erforderlich, den gesamten Datenverkehr zur Analyse und zur Verarbeitung von dem ersten Netzwerk in ein Backend, wie das zweite Netzwerk und/oder zu der Überwachungs-Einheit, zu übertragen.

Eine Fehlermeldung ist insbesondere eine Nachricht. Die Nachricht wird vorzugsweise an die Überwachungs-Einheit und/oder einen Computer, wie einen Server oder einen Client, der mit der Überwachungs-Einheit verbunden ist, übertragen. Die Nachricht kann auch an die Übertragungsvorrichtung selbst übertragen werden. Die Überwachungs-Einheit kann als ein MSSP ("Managed Security Service Provider") ausgebildet sein.

Gemäß einer weiteren Ausführungsform sind die Erkennungs-Einheit und die Modellierungs-Einheit jeweils softwaretechnisch in Form einer Sicherheitsapplikation ausgebildet.

Die Sicherheitsapplikationen sind insbesondere isoliert von dem ersten und dem zweiten Netzwerk in der DMZ, vorzugsweise in der CPU, angeordnet. Dies führt zu einer Erhöhung der Manipulationssicherheit der Erkennungs-Einheit sowie der Modellierungs-Einheit, wodurch die Sicherheit bei der Datenübertragung zwischen dem ersten und dem zweiten Netzwerk erhöht wird.

Die Übertragungsvorrichtung kann weitere Sicherheitsapplikationen oder -anwendungen umfassen, die beispielsweise für eine Datenkompression oder eine Datenfilterung der von dem ersten Netzwerk empfangenen Daten eingerichtet sind. Eine Sicherheitsapplikation oder eine Applikation ist insbesondere ein nicht betriebssystem-relevantes Computerprogramm.

Gemäß einer weiteren Ausführungsform ist die Übertragungsvorrichtung dazu eingerichtet, über einen zwischen dem ersten Netzwerk und der ersten unidirektionalen Übertragungs-Einheit angeordneten Netzwerk-Switch die Daten von dem ersten Netzwerk zu empfangen, wobei zumindest ein Eingang des Netzwerk-Switches zur Übertragung von Daten mit dem ersten Netzwerk verbunden ist und ein als ein Ausgang des Netzwerk-Switches ausgebildeter Spiegelungs-Port zur Übertragung von Daten mit der ersten unidirektionalen Übertragungs-Einheit verbunden ist.

Durch die Verwendung eines Netzwerk-Switches mit Spiegelungs-Port (engl. "mirror port") ist es in vorteilhafter Weise möglich, den gesamten Datenverkehr des ersten Netzwerkes über die erste unidirektionale Übertragungs-Einheit für die Übertragungsvorrichtung bereitzustellen. Dadurch wird es in vorteilhafter Weise der Übertragungsvorrichtung ermöglicht, den Datenverkehr jedes Teilnehmers des ersten Netzwerkes zu erhalten, zu überwachen und zu analysieren. Dadurch erhöht sich die Zuverlässigkeit bei der Erkennung einer Anomalität in dem ersten Netzwerk und damit die Sicherheit bei der Verarbeitung von Daten in dem ersten Netzwerk und der Übertragungsvorrichtung.

Insbesondere ist zwischen dem ersten Netzwerk und dem Netzwerk-Switch ein erster Verbindungsabschnitt, zwischen dem Netzwerk-Switch und der Übertragungsvorrichtung ein zweiter Verbindungsabschnitt und zwischen der Übertragungsvorrichtung und dem zweiten Netzwerk ein dritter Verbindungsabschnitt angeordnet. Der erste Verbindungsabschnitt stellt insbesondere eine Verbindung zwischen dem ersten Netzwerk und dem Netzwerk-Switch her. Der zweite Verbindungsabschnitt stellt vorzugsweise eine Verbindung zwischen dem Netzwerk-Switch und der Übertragungsvorrichtung über die erste unidirektionale Übertragungs-Einheit her. Der dritte Verbindungsabschnitt stellt beispielsweise eine Verbindung zwischen dem zweiten Netzwerk und der Übertragungsvorrichtung über die zweite unidirektionale Übertragungs-Einheit her. Der erste, zweite und/oder dritte Verbindungsabschnitt ist insbesondere drahtgebunden, beispielsweise in Form zumindest einer Kupferleitung oder einer Aluminiumleitung, und/oder optisch in Form zumindest einer Glasfaserleitung ausgebildet. Der Netzwerk-Switch ist insbesondere als ein Switch ausgebildet.

Der Spiegelungs-Port des Netzwerk-Switches dient insbesondere dazu, den Netzwerkverkehr des ersten Netzwerkes zu spiegeln, um damit Ausschnitte oder die Gesamtheit des Daten- und/oder Netzwerkverkehrs des ersten Netzwerkes der Übertragungsvorrichtung über die erste unidirektionale Übertragungs-Einheit bereitzustellen.

Gemäß einer weiteren Ausführungsform ist die Übertragungsvorrichtung dazu eingerichtet, eine Übertragung von Daten zwischen dem ersten Netzwerk und dem zweiten Netzwerk in einer Übertragungsschicht, Schicht 2 gemäß dem OSI/ISO-Schichtmodell, durchzuführen.

Gemäß einer weiteren Ausführungsform umfasst das erste Netzwerk ein Steuerungsnetzwerk, insbesondere ein Produktionsnetzwerk oder ein Bahnsicherungsnetzwerk, und das zweite Netzwerk ein Diagnosenetzwerk, ein lokales Netzwerk oder das Internet.

Das erste Netzwerk ist insbesondere als ein sicherheitskritisches Netzwerk ausgebildet, während das zweite Netzwerk als ein offenes Netzwerk ausgebildet ist. Auch kann das erste Netzwerk als ein Netzwerk mit einer hohen Sicherheitsanforderung bezeichnet werden, während das zweite Netzwerk als ein Netzwerk mit geringer Sicherheitsanforderung bezeichnet wird.

Ein Produktionsnetzwerk wird insbesondere in einer Produktionsanlage verwendet. Die Produktionsanlage umfasst insbesondere mehrere über das Produktionsnetzwerk miteinander verbundene Maschinen und Computer. Ein Bahnsicherungsnetzwerk umfasst vorzugsweise Leit- und Sicherheitstechnik für eine Schieneninfrastruktur. Das Steuerungsnetzwerk umfasst ferner insbesondere ein Straßensicherungsnetzwerk, welches Leit- und Sicherheitstechnik für eine Straßeninfrastruktur aufweist.

Ein lokales Netzwerk umfasst beispielsweise ein LAN ("Local Area Network") und/oder ein WLAN ("Wireless Local Area Network").

Gemäß einer weiteren Ausführungsform sind zumindest die erste unidirektionale Übertragungs-Einheit, die zweite unidirektionale Übertragungs-Einheit und die Erkennungs-Einheit in einem gemeinsamen Gehäuse implementiert.

Somit sind die in dieser Ausführungsform aufgeführten Komponenten inklusive der Übertragungsvorrichtung selbst in einem gemeinsamen Gehäuse implementiert. Ein Gehäuse oder ein gemeinsames Gehäuse ist insbesondere als ein Gehäuse eines Prozessors oder eines Computerchips, beispielsweise in Form eines integrierten Schaltkreises (engl. "Integrated Circuit" (IC)), ausgebildet. Ferner ist ein Gehäuse vorzugsweise als ein gemeinsames Gehäuse eines Gerätes oder beispielsweise als eine gemeinsame Implementierung auf einem FPGA (engl. "Field Programmable Gate Array") ausgebildet.

Gemäß einer weiteren Ausführungsform sind die erste unidirektionale Übertragungs-Einheit und die zweite unidirektionale Übertragungs-Einheit jeweils softwaretechnisch in Form einer unidirektionalen Firewall implementiert.

Bei einer softwaretechnischen Implementierung kann die jeweilige Einheit, wie beispielsweise die erste unidirektionale Übertragungs-Einheit als ein Computerprogrammprodukt, als eine Funktion, als eine Routine, als Teil eines Programmcodes oder als ausführbares Objekt ausgebildet sein.

Durch die softwaretechnische Implementierung mittels einer Firewall wird die Unidirektionalität der Datenübertragung der ersten und/oder der zweiten Übertragungs-Einheit in logischer Form erzielt. Dies bedeutet, dass die Unidirektionalität der Datenübertragung mittels einer Anwendung von Algorithmen erfolgt, mittels welchen die unidirektionale Firewall so programmiert wird, dass jeweils nur eine unidirektionale Datenübertragung durch die erste und die zweite unidirektionale Übertragungs-Einheit möglich ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagram eines ersten Ausführungsbeispiels einer Übertragungsvorrichtung zum Übertragen von Daten; und
- Fig. 2: zeigt ein schematisches Blockdiagram eines zweiten Ausführungsbeispiels einer Übertragungsvorrichtung zum Übertragen von Daten.

In den Figuren sind gleiche oder funktionsgleiche Elemente mit denselben Bezugszeichen versehen worden, sofern nichts anderes angegeben ist.

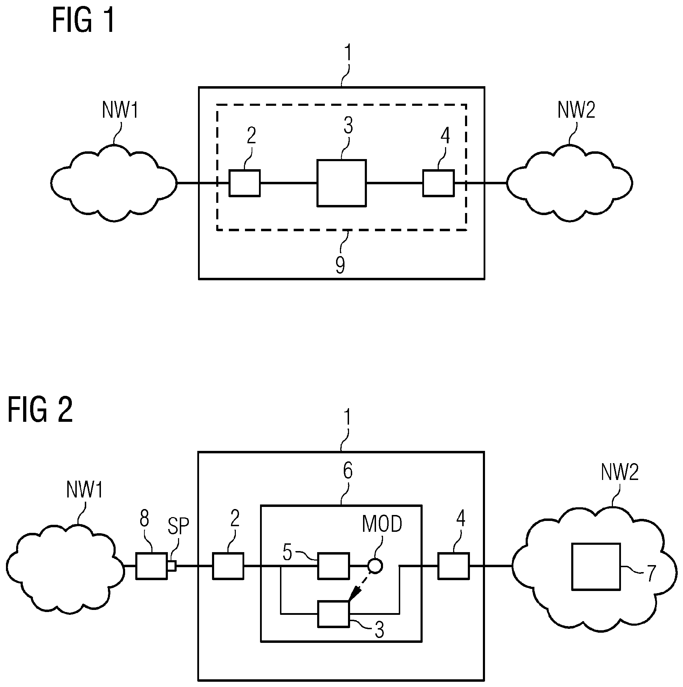

Fig. 1 zeigt ein schematisches Blockdiagram eines ersten Ausführungsbeispiels einer Übertragungsvorrichtung 1 zum Übertragen von Daten zwischen einem ersten Netzwerk NW1, beispielsweise umfassend ein Produktionsnetzwerk, und einem zweiten Netzwerk NW2, beispielsweise umfassend ein lokales Netzwerk. Diese Übertragung von Daten wird insbesondere in einer Übertragungsschicht, Schicht 2 gemäß dem OSI/ISO-Schichtmodell, durchgeführt. In einer weiteren Ausführungsform kann das erste Netzwerk NW1 ein Bahnsicherungsnetzwerk umfassen, während das zweite Netzwerk NW2 das Internet ist.

Die Übertragungsvorrichtung 1 weist eine mit dem ersten Netzwerk NW1 koppelbare, erste unidirektionale Übertragungs-Einheit 2, eine mit dem zweiten Netzwerk NW2 koppelbare, zweite unidirektionale Übertragungs-Einheit 4 sowie eine Erkennungs-Einheit 3 auf, die zwischen der ersten unidirektionalen Übertragungs-Einheit 2 und der zweiten unidirektionalen Übertragungs-Einheit 4 angeordnet ist.

In der ersten Ausführungsform sind die Übertragungsvorrichtung 1 umfassend die erste unidirektionale Übertragungs-Einheit 2, die zweite unidirektionale Übertragungs-Einheit 4 und die Erkennungs-Einheit 3 in einem gemeinsamen Gehäuse 9 implementiert.

Die erste unidirektionale Übertragungs-Einheit 2 ist dazu eingerichtet, von dem ersten Netzwerk NW1 zu der Übertragungsvorrichtung 1 übertragene Daten ausschließlich zu empfangen, während die zweite unidirektionale Übertragungs-Einheit 4 dazu eingerichtet ist, Daten von der Übertragungsvorrichtung 1 zu dem zweiten Netzwerk NW2 ausschließlich zu senden.

In der ersten Ausführungsform der Fig. 1 sind die erste unidirektionale Übertragungs-Einheit 2 und die zweite unidirektionale Übertragungs-Einheit 4 jeweils hardwaretechnisch in Form eines Netzwerk-TAPs implementiert. In einer weiteren Ausführungsform können die erste und die zweite unidirektionale Übertragungs-Einheit 2, 4 jeweils hardwaretechnisch in Form einer unidirektionalen Datendiode oder jeweils softwaretechnisch in Form einer unidirektionalen Firewall implementiert sein.

Ferner ist die Erkennungs-Einheit 3 dazu eingerichtet, die von der ersten unidirektionalen Übertragungs-Einheit 2 empfangenen Daten zu empfangen und Anomalitäten an den empfangenen Daten zu erkennen. Hierbei umfasst eine durch die Erkennungs-Einheit 3 erkannte Anomalität insbesondere unterschiedliche Anomalitätstypen, wie einen ersten Anomalitätstyp und einen zweiten Anomalitätstyp.

Fig. 2 zeigt ein schematisches Blockdiagram eines zweiten Ausführungsbeispiels einer Übertragungsvorrichtung 1 zum Übertragen von Daten.

Dabei weist die Übertragungsvorrichtung 1 eine zwischen der ersten unidirektionalen Übertragungs-Einheit 2 und der zweiten unidirektionalen Übertragungs-Einheit 4 angeordnete CPU 6 auf, in welcher die Erkennungs-Einheit 3 sowie zusätzlich eine Modellierungs-Einheit 5 implementiert sind. Die Modellierungs-Einheit 5 ist hierbei dazu eingerichtet, ein Modell MOD mit netzwerkspezifischen Daten von dem ersten Netzwerk NW1 bereitzustellen. Hierbei sind die Erkennungs-Einheit 3 und die Modellierungs-Einheit 5 beispielsweise jeweils softwaretechnisch in Form einer Sicherheitsapplikation ausgebildet.

Die Modellierungs-Einheit 5 ist insbesondere dazu eingerichtet, das Modell MOD in Abhängigkeit von Vorkonfigurationsdaten des ersten Netzwerkes NW1 bereitzustellen und/oder in Abhängigkeit von an einem bestimmten Zeitpunkt und/oder in Abhängigkeit von während einer bestimmten Zeitdauer von dem ersten Netzwerk NW1 über die erste unidirektionale Übertragungs-Einheit 2 empfangenen Daten bereitzustellen. Das somit bereitgestellte Modell MOD wird anschließend der Erkennungs-Einheit 3 zur Verfügung gestellt.

In dieser zweiten Ausführungsform ist die Erkennungs-Einheit 3 dazu eingerichtet, die von der ersten unidirektionalen Übertragungs-Einheit 2 empfangenen Daten mit den netzwerkspezifischen Daten des bereitgestellten Modells MOD zu vergleichen, um ein Vergleichsergebnis zu erhalten. Anschließend ist die Erkennungs-Einheit 3 dazu eingerichtet, aus dem erhaltenen Vergleichsergebnis abzuleiten, ob zumindest eine Anomalität an den empfangenen Daten vorliegt. Wenn hierbei eine Anomalität vorliegt, ist die Übertragungsvorrichtung 1 dazu eingerichtet, eine Fehlermeldung umfassend die erkannte Anomalität über die zweite unidirektionale Übertragungs-Einheit 4 an eine Überwachungs-Einheit 7, welche in dem zweiten Netzwerk NW2 angeordnet ist, zu übertragen. In einer weiteren Ausführungsform kann die Überwachungs-Einheit 7 auch mit dem zweiten Netzwerk NW2 verbunden sein.

In Fig. 2 ist ferner zwischen dem ersten Netzwerk NW1 und der ersten unidirektionalen Übertragungs-Einheit 2 ein Netzwerk-Switch 8 angeordnet.

Die Übertragungsvorrichtung 1 ist hierbei dazu eingerichtet, über den Netzwerk-Switch 8 die Daten von dem ersten Netzwerk NW1 zu empfangen. Zumindest ein Eingang des Netzwerk-Switches 8 ist zur Übertragung von Daten mit dem ersten Netzwerk NW1 verbunden. Ein als ein Ausgang des Netzwerk-Switches 8 ausgebildeter Spiegelungs-Port SP zur Übertragung von Daten ist mit der ersten unidirektionalen Übertragungs-Einheit 2 verbunden.

Obwohl die vorliegende Erfindung anhand von Ausführungsbeispielen beschrieben wurde, ist sie vielfältig modifizierbar.

## Patentansprüche

1. Übertragungsvorrichtung (1) zum Übertragen von Daten zwischen einem ersten Netzwerk (NW1) und einem zweiten Netzwerk (NW2), mit einer mit dem ersten Netzwerk (NW1) koppelbaren, ersten unidirektionalen Übertragungs-Einheit (2), die dazu eingerichtet ist, von dem ersten Netzwerk (NW1) zu der Übertragungsvorrichtung (1) übertragene Daten ausschließlich zu empfangen,
eine mit dem zweiten Netzwerk (NW2) koppelbaren, zweiten unidirektionalen Übertragungs-Einheit (4), die dazu eingerichtet ist, Daten von der Übertragungsvorrichtung (1) zu dem zweiten Netzwerk (NW2) ausschließlich zu senden, und
eine zwischen der ersten unidirektionalen Übertragungs-Einheit (2) und der zweiten unidirektionalen Übertragungs-Einheit (4) angeordneten Erkennungs-Einheit (3), die dazu eingerichtet ist, die von der ersten unidirektionalen Übertragungs-Einheit (2) empfangenen Daten zu empfangen und Anomalitäten an den empfangenen Daten zu erkennen,
**gekennzeichnet dadurch, dass**
- die Übertragungsvorrichtung (1) zumindest eine zwischen der ersten unidirektionalen Übertragungs-Einheit (2) und der zweiten unidirektionalen Übertragungs-Einheit (4) angeordnete CPU (6) aufweist, in welcher die Erkennungs-Einheit (3) sowie zusätzlich eine Modellierungs-Einheit (5) implementiert sind, wobei die Übertragungsvorrichtung (1) dazu eingerichtet ist, eine Übertragung von Daten zwischen dem ersten Netzwerk (NW1) und dem zweiten Netzwerk (NW2) in einer Übertragungsschicht, Schicht 2 gemäß dem OSI/ISO-Schichtmodell, durchzuführen, wobei die Modellierungs-Einheit (5) dazu eingerichtet ist, ein Modell (MOD) mit netzwerkspezifischen Daten von dem ersten Netzwerk (NW1) bereitzustellen, und
- dass die Modellierungs-Einheit (5) dazu eingerichtet ist, das Modell (MOD) zumindest in Abhängigkeit von an einem bestimmten Zeitpunkt und/oder in Abhängigkeit von während einer bestimmten Zeitdauer von dem ersten Netzwerk (NW1) über die erste unidirektionale Übertragungs-Einheit (2) empfangenen Daten bereitzustellen und das somit bereitgestellte Modell (MOD) der Erkennungs-Einheit (3) zur Verfügung zu stellen,
- und dass die Erkennungs-Einheit (3) dazu eingerichtet ist, die von der ersten unidirektionalen Übertragungs-Einheit (2) empfangenen Daten mit den netzwerkspezifischen Daten des bereitgestellten Modells (MOD) zu vergleichen, um ein Vergleichsergebnis zu erhalten, wobei die Erkennungs-Einheit (3) dazu eingerichtet ist, aus dem erhaltenen Vergleichsergebnis abzuleiten, ob zumindest eine Anomalität an den empfangenen Daten vorliegt.

2. Übertragungsvorrichtung nach Anspruch **1,**
**dadurch gekennzeichnet,**
**dass** die erste unidirektionale Übertragungs-Einheit (2) und die zweite unidirektionale Übertragungs-Einheit (4) jeweils hardwaretechnisch zumindest in Form eines Netzwerk-TAP oder einer unidirektionalen Datendiode implementiert sind.

3. Übertragungsvorrichtung nach Anspruch 1 oder **2,**
**dadurch gekennzeichnet,**
**dass** die von der Erkennungs-Einheit (3) erkennbaren Anomalitäten einen ersten Anomalitätstyp und einen zweiten Anomalitätstyp umfassen, wobei sich der erste Anomalitätstyp von dem zweiten Anomalitätstyp unterscheidet.

4. Übertragungsvorrichtung nach einem der vorangehenden Ansprüche,
**dadurch gekennzeichnet,**
**dass** die Modellierungs-Einheit (5) dazu eingerichtet ist, das Modell (MOD) in Abhängigkeit von Vorkonfigurationsdaten des ersten Netzwerkes (NW1) bereitzustellen und das somit bereitgestellte Modell (MOD) der Erkennungs-Einheit (3) zur Verfügung zu stellen.

5. Übertragungsvorrichtung nach Anspruch **4,**
**dadurch gekennzeichnet,**
**dass** die Übertragungsvorrichtung (1) dazu eingerichtet ist, bei einem Vorliegen der zumindest einen Anomalität an den empfangenen Daten eine Fehlermeldung umfassend die erkannte Anomalität über die zweite unidirektionale Übertragungs-Einheit (4) an eine Überwachungs-Einheit (7), welche in dem zweiten Netzwerk (NW2) angeordnet ist oder mit diesem verbunden ist, zu übertragen.

6. Übertragungsvorrichtung nach einem der vorhergehenden Ansprüche,
**dadurch gekennzeichnet,**
**dass** die Erkennungs-Einheit (3) und die Modellierungs-Einheit (5) jeweils softwaretechnisch in Form einer Sicherheitsapplikation ausgebildet sind.

7. Übertragungsvorrichtung nach einem der vorhergehenden Ansprüche, **dadurch gekennzeichnet,**
**dass** die Übertragungsvorrichtung (1) dazu eingerichtet ist, über einen zwischen dem ersten Netzwerk (NW1) und der ersten unidirektionalen Übertragungs-Einheit (2) angeordneten Netzwerk-Switch (8) die Daten von dem ersten Netzwerk (NW1) zu empfangen, wobei zumindest ein Eingang des Netzwerk-Switches (8) zur Übertragung von Daten mit dem ersten Netzwerk (NW1) verbunden ist und ein als ein Ausgang des Netzwerk-Switches (8) ausgebildeter Spiegelungs-Port (SP) zur Übertragung von Daten mit der ersten unidirektionalen Übertragungs-Einheit (2) verbunden ist.

8. Übertragungsvorrichtung nach einem der vorhergehenden Ansprüche, **dadurch gekennzeichnet,**
**dass** das erste Netzwerk (NW1) ein Steuerungsnetzwerk, insbesondere ein Produktionsnetzwerk oder ein Bahnsicherungsnetzwerk, umfasst und das zweite Netzwerk (NW2) ein Diagnosenetzwerk, ein lokales Netzwerk oder das Internet umfasst.

9. Übertragungsvorrichtung nach einem der vorhergehenden Ansprüche,
**dadurch gekennzeichnet,**
**dass** zumindest die erste unidirektionale Übertragungs-Einheit (2), die zweite unidirektionale Übertragungs-Einheit (4) und die Erkennungs-Einheit (3) in einem gemeinsamen Gehäuse (9) implementiert sind.

10. Übertragungsvorrichtung nach einem der Ansprüche 3 - 9, **dadurch gekennzeichnet,**
**dass** die erste unidirektionale Übertragungs-Einheit (2) und die zweite unidirektionale Übertragungs-Einheit (4) jeweils softwaretechnisch in Form einer unidirektionalen Firewall implementiert sind.

## Claims

1. Transmission device (1) for transmitting data between a first network (NW1) and a second network (NW2), having a first unidirectional transmission unit (2), which is couplable to the first network (NW1) and designed to exclusively receive data transmitted from the first network (NW1) to the transmission device (1),
a second unidirectional transmission unit (4), which is couplable to the second network (NW2) and designed to exclusively send data from the transmission device (1) to the second network (NW2), and
a detection unit (3), which is arranged between the first unidirectional transmission unit (2) and the second unidirectional transmission unit (4) and designed to receive the data received by the first unidirectional transmission unit (2) and to detect anomalies in the received data,
**characterized in that**
- the transmission device (1) comprises at least one CPU (6), which is arranged between the first unidirectional transmission unit (2) and the second unidirectional transmission unit (4) and in which the detection unit (3) and additionally a modelling unit (5) are implemented, the transmission device (1) being designed to perform a transmission of data between the first network (NW1) and the second network (NW2) in a transmission layer, Layer 2 based on the OSI/ISO layer model, the modelling unit (5) being designed to provide a model (MOD) containing network-specific data from the first network (NW1), and
- the modelling unit (5) is designed to provide the model (MOD) at least on the basis of data received from the first network (NW1) by way of the first unidirectional transmission unit (2) at a specific time and/or on the basis of data received from the first network (NW1) by way of the first unidirectional transmission unit (2) during a specific period and to make the thus provided model (MOD) available to the detection unit (3),
- and the detection unit (3) is designed to compare the data received by the first unidirectional transmission unit (2) with the network-specific data of the provided model (MOD) in order to obtain a comparison result, the detection unit (3) being designed to use the comparison result obtained to deduce whether there is at least one anomaly in the received data.

2. Transmission device according to Claim 1,
**characterized**
**in that** the first unidirectional transmission unit (2) and the second unidirectional transmission unit (4) are each implemented in hardware at least in the form of a network TAP or a unidirectional data diode.

3. Transmission device according to Claim 1 or 2,
**characterized**
**in that** the anomalies detectable by the detection unit (3) comprise a first anomaly type and a second anomaly type, the first anomaly type differing from the second anomaly type.

4. Transmission device according to one of the preceding claims,
**characterized**
**in that** the modelling unit (5) is designed to provide the model (MOD) on the basis of preconfiguration data of the first network (NW1) and to make the thus provided model (MOD) available to the detection unit (3).

5. Transmission device according to Claim 4,
**characterized**
**in that** the transmission device (1) is designed so as, if there is the at least one anomaly in the received data, to use the second unidirectional transmission unit (4) to transmit an error report comprising the detected anomaly to a monitoring unit (7) that is arranged in the second network (NW2) or is connected thereto.

6. Transmission device according to one of the preceding claims,
**characterized**
**in that** the detection unit (3) and the modelling unit (5) are each produced in software in the form of a security application.

7. Transmission device according to one of the preceding claims, **characterized**
**in that** the transmission device (1) is designed to use a network switch (8) arranged between the first network (NW1) and the first unidirectional transmission unit (2) to receive the data from the first network (NW1), at least one input of the network switch (8) being connected to the first network (NW1) for the purpose of transmitting data and a mirror port (SP) in the form of an output of the network switch (8) being connected to the first unidirectional transmission unit (2) for the purpose of transmitting data.

8. Transmission device according to one of the preceding claims, **characterized**
**in that** the first network (NW1) comprises a control network, in particular a production network or a rail safety network, and the second network (NW2) comprises a diagnostic network, a local area network or the Internet.

9. Transmission device according to one of the preceding claims,
**characterized**
**in that** at least the first unidirectional transmission unit (2), the second unidirectional transmission unit (4) and the detection unit (3) are implemented in a shared package (9).

10. Transmission device according to one of Claims 3 - 9,
**characterized**
**in that** the first unidirectional transmission unit (2) and the second unidirectional transmission unit (4) are each implemented in software in the form of a unidirectional firewall.

## Revendications

1. Dispositif de transmission (1) pour la transmission de données entre un premier réseau (NW1) et un deuxième réseau (NW2), avec une première unité de transmission unidirectionnelle (2) pouvant être couplée au premier réseau (NW1), laquelle est conçue pour recevoir exclusivement des données transmises du premier réseau (NW1) au dispositif de transmission (1),
une deuxième unité de transmission unidirectionnelle (4) pouvant être couplée au deuxième réseau (NW2), laquelle est conçue pour envoyer exclusivement des données du dispositif de transmission (1) au deuxième réseau (NW2), et
une unité de détection (3) disposée entre la première unité de transmission unidirectionnelle (2) et la deuxième unité de transmission unidirectionnelle (4), laquelle est conçue pour recevoir des données reçues en provenance de la première unité de transmission unidirectionnelle (2) et pour détecter des anomalies dans les données reçues,
**caractérisé en ce que**
- le dispositif de transmission (1) comprend au moins un CPU (6) disposé entre la première unité de transmission unidirectionnelle (2) et la deuxième unité de transmission unidirectionnelle (4), dans lequel l'unité de détection (3) ainsi qu'en outre une unité de modélisation (5) sont mises en œuvre, le dispositif de transmission (1) étant conçu pour réaliser une transmission de données entre le premier réseau (NW1) et le deuxième réseau (NW2) dans une couche de transmission, la couche 2 selon le modèle de couche OSI/ISO, dans lequel l'unité de modélisation (5) est conçue pour fournir un modèle (MOD) avec des données spécifiques au réseau provenant du premier réseau (NW1), et
- l'unité de modélisation (5) est conçue pour fournir le modèle (MOD) au moins en fonction de données reçues en provenance du premier réseau (NW1) par l'intermédiaire de la première unité de transmission unidirectionnelle (2) à un moment déterminé et/ou pendant une durée déterminée et pour mettre à disposition de l'unité de détection (3) le modèle (MOD) ainsi fourni,
- et l'unité de détection (3) est conçue pour comparer les données reçues en provenance de la première unité de transmission unidirectionnelle (2) avec les données spécifiques au réseau du modèle (MOD) fourni afin d'obtenir un résultat de comparaison, dans lequel l'unité de détection (3) est conçue pour déduire du résultat de comparaison obtenu si au moins une anomalie est présente dans les données reçues.

2. Dispositif de transmission selon la revendication 1,
**caractérisé en ce que**
la première unité de transmission unidirectionnelle (2) et la deuxième unité de transmission unidirectionnelle (4) sont mises en œuvre respectivement sur le plan matériel au moins sous la forme d'un TAP réseau ou d'une diode de données unidirectionnelle.

3. Dispositif de transmission selon la revendication 1 ou la revendication 2,
**caractérisé en ce que**
les anomalies détectables par l'unité de détection (3) comportent un premier type d'anomalie et un deuxième type d'anomalie, dans lequel le premier type d'anomalie est différent du deuxième type d'anomalie.

4. Dispositif de transmission selon l'une des revendications précédentes,
**caractérisé en ce que**
l'unité de modélisation (5) est conçue pour fournir le modèle (MOD) en fonction de données de préconfiguration du premier réseau (NW1) et pour mettre à disposition de l'unité de détection (3) le modèle (MOD) ainsi fourni.

5. Dispositif de transmission selon la revendication 4,
**caractérisé en ce que**
le dispositif de transmission (1) est conçu, en cas de présence de l'au moins une anomalie dans les données reçues, pour transmettre un message d'erreur comportant l'anomalie détectée par l'intermédiaire de la deuxième unité de transmission unidirectionnelle (4) à une unité de surveillance (7), laquelle est disposée dans le deuxième réseau (NW2) ou est reliée à celui-ci.

6. Dispositif de transmission selon l'une des revendications précédentes,
**caractérisé en ce que**
l'unité de détection (3) et l'unité de modélisation (5) sont constituées respectivement sur le plan logiciel sous la forme d'une application de sécurité.

7. Dispositif de transmission selon l'une des revendications précédentes,
**caractérisé en ce que**
le dispositif de transmission (1) est conçu pour recevoir les données en provenance du premier réseau (NW1) par l'intermédiaire d'un commutateur réseau (8) disposé entre le premier réseau (NW1) et la première unité de transmission unidirectionnelle (2), dans lequel au moins une entrée du commutateur réseau (8) est reliée au premier réseau (NW1) pour la transmission de données et un port de mise en miroir (SP) constitué en tant que sortie du commutateur réseau (8) est relié à la première unité de transmission unidirectionnelle (2) pour la transmission de données.

8. Dispositif de transmission selon l'une des revendications précédentes,
**caractérisé en ce que**
le premier réseau (NW1) comporte un réseau de commande, en particulier un réseau de production ou un réseau de sécurité ferroviaire, et le deuxième réseau (NW2) comporte un réseau de diagnostic, un réseau local ou Internet.

9. Dispositif de transmission selon l'une des revendications précédentes,
**caractérisé en ce que**
au moins la première unité de transmission unidirectionnelle (2), la deuxième unité de transmission unidirectionnelle (4) et l'unité de détection (3) sont mises en œuvre dans un boîtier (9) commun.

10. Dispositif de transmission selon l'une des revendications 3 à 9,
**caractérisé en ce que**
la première unité de transmission unidirectionnelle (2) et la deuxième unité de transmission unidirectionnelle (4) sont mises en œuvre respectivement sur le plan logiciel sous la forme d'un pare-feu unidirectionnel.
